Europäisches Patentamt

European Patent Office

Office européen des brevets

(19)

(11) Publication number: **0 039 368**
A1

## (12) EUROPEAN PATENT APPLICATION

published in accordance with Art. 158(3) EPC

(21) Application number: **79900920.4**

(22) Date of filing: **08.08.79**

Data of the international appli-
cation taken as a basis:

(86) International application number:
**PCT/JP 79/00208**

(87) International publication number:
**WO 81/00439 (19.02.81 81/5)**

(51) Int. Cl.³: **F 16 H 3/54,** F 16 H 5/18

(43) Date of publication of application: **11.11.81**
**Bulletin 81/45**

(84) Designated Contracting States: **CH DE FR GB NL**

(71) Applicant: **ISEKI & CO., LTD., 700, Umaki-cho,
Matuyama-shi Ehime 790 (JP)**

(72) Inventor: **NISHIHARA, Tadao, 2313-35, Taizanji-cho,
Matuyama-shi Ehime 799-26 (JP)**
Inventor: **HIYODO, Osamu, 3-5, Yougohigashi 4-chome,
Matuyama-shi Ehime 790 (JP)**

(74) Representative: **Goddar, Heinz, Dr. et al, FORRESTER &
BOEHMERT Widenmayerstrasse 4/I,
D-8000 München 22 (DE)**

(54) **REDUCTION GEAR SHIFTING DEVICE.**

(57) This reduction gear shifting device is employed in shifting the working speed of an agricultural tractor and is adapted to shift, in a simple manner, between a certain set rotational speed and reduced rotational speed slightly lower than the set speed. According to this device, the sun gear (30b) of a planetary gear mechanism is either coupled to an output shaft (12) or rendered stationary via a clutch (41) and a brake (42) provided at the axial side of an internal gear (7a). A supporting frame (17) for journaling the shaft (12) internally accommodates the clutch (41) and the brake (42) together with the internal gear (7a) to thereby install them at the front transmission case (3). The clutch (41) and the brake (42) are of a frictional multi-disk type in which at least one frictional plate (33) in one member is connected to at least one in the other member so as to move in the same direction. The brake (42) is so adapted that the supporting frame (17) serves as a stationary side member. The piston (40) for operating the clutch (41) and the brake (42) is movably fitted over a collar (36) fitted over the outside of a center boss (30c) of a housing (30) incorporating the sun gear (30b).

SPECIFICATIONS

TITLE MODIFIED
see front page

Title of Invention

Decelerating changeover equipment

Technical field

This invention is concerned with the decelerating changeover
equipment for easier performance of mutual changeover of transmission on the decelerating rotation speed for the speed already
established, for instance, it is concenred with the decelerating
changeover equipment suitable for use in the running-transmission
mechanism or power-taken out transmission mechanism in transmission-
case of the tractor for agricultural uses.

Beckground technology

In agricultural tractors, for example, when cultivation is done
in the use of rotary, the cultivating resistance is changed by
the quality of the cultivating ground, that is, coking degree,
granularity, etc.    Such alterations of cultivating resistance
during cultivation will give some pulsating or shocking loads
to the tractor and rotaries on those parts, thus reducing the
durability and operative performances.
It is, therefore, desirable to control the cultivating speed,
such as tracting running speed of the agricultural tractor or
cultivating rotation speed of the rotary, without changing the
cultivating depth.

As the countermeasure, it is desirable to control the cultivating speed without changing the cultivating depth, e.g., traction-running speed of agricultural tractor or cultivating raising rotation speed of the rotary.

A well known structure is that for changeover of transmission-gear in the gear-line for prompt and easy changeover.

However, such a changeover of the clutch by sliding of transmission gear needs the structure necessary for temporary intermission of the rotation power by the clutch or complicated gear-mechanism by simultaneous clutch, thus there is either problem of complicated changeover operation or that of the complicated structure.

Such a transmission-changeover equipment can be easily mounted on the agricultural tractors in accordance with the specifications by the size and types, and the confirmation of the operation can be easily done in its structures as desirable with the smaller size. Thus the transmission-changeover equipment of this invention is fulfilling these requirements.

DISCLOSURE OF THE INVENTION:

In this invention, the internal toothed gear driven for the rotation by the motor, the power-axial part mounted pivotally in its free rotation for the planetary gear clutched with the said internal toothed gear, solar gear clutched with the said planetary gear on the same axis, and the output-axial part mounted on the lateral side of the axial direction of the said internal toothed gear, are unified in one body with the said solar gear. Otherwise, it is composed of the clutch part detachable from the solar gear and the brake part being able to stop or rotatable of the said solar gear, and also, the output-axial part with the connecting state of clutch part is unified with the solar gear, while the brake-part is maintained rotatable of the solar gear, thereby, the internal toothed gear and the output-axial part are unified in one body, and rotation-power of the internal gear is transmitted to the output-axial part under the directly coupled state without speed-change, thus the agricultural tractor runs for cultivating operation at the desired set speed by the major-transmitting gear line and sub-transmitting gear line mounted each on the front and rear position of this decelerating changeover-equipment.

On the other hand, some deceleration of the rotation speed of the output-axial part is obtained against the said set speed by stopping the solar gear by the operation of the brake-part after detaching the solar gear from the output-axial part by setting the clutch-part off state.

That is, the speed-ratio is:

$$= \frac{\text{Number of teeth in the internal gear (N)}}{(N) + \begin{array}{l}\text{Number of teeth of}\\ \text{solar gear}\end{array}}$$

Accordingly, by setting the number of teeth of the internal toothed gear more numerously than that of the solar gear, a little decelerated rotation-speed against that of the internal toothed gear can be obtained from the output-axial part. Then, for instance, when the cultivating resistance during the operation for cultivation by the set speed as in the above is felt, the clutch part is put to "OFF" for changing-over to the operating state, the running cultivation-speed of the agricultural tractor is a little reduced, and it is possible to correspond to the increase of cultivating resis-tance promptly, also, there is no necessity to make troublesome operation of "ON and OFF" of the transmission gear in the above changeover operation.

In this invention, these clutch part and brake part are both equipped at the side of the axial direction of the internal toothed gear, thus the external shape of the clutch part and brake-part can be formed into nearly the equal cylindrical type of the same diameter.

-4-

The decelerating equipment consisting of these parts can be equipped in smaller size within the small hollow cylindrical supporting frame of the surrounding external shape.

The equipment of this invention supports the output-axial part axially, and this supporting frame is internally equipped with the above internal gears clutch-part and brake-part, moreover, this supporting frame is composed to act as the member of resting side of the brake part, thus on the occasion of assembling work of the equipment of this invention, by mounting the supporting frame equipped previously with the internal gears, it is possible to operate the equipment of this invention by transmitting the pressure fluid to the clutch part or brake part from the change-over valve and liquid-transmitting tube mounted on the side of front mission side, thereby, before the assembling operation of rear mission case, the equipment of this invention can be trially operated for confirmation and test on the directly connected driving or decelerating rotation.

Furthermore, this supporting frame is formed to be able to mount or dismount the front transmission case to the wall part, thus before mounting to this front transmission case, by incorporating the output- axial part, clutch part and brake part in the frame of the support, thereby, this supporting frame can be mounted on the front transmission case.

Thereby, the previously assembled operation makes the centering action easier.

Moreover, the clutch part and brake part of this invention is constructed with multiplates' system pushing the plural friction-plates to make the pushing pistion by the load of pressure liquid movable towards the same axial line, and these frictional plates are mutually connected to the connecting pin to be able to move each friction-plate of the clutch part and brake part pushed direction by each pistón as one body, thereby, when the clutch-part is in the connecting state, the friction plate of the brake part separates one another surely, thus no brake acts on the solar gears, then the internal gears show the directly connected state with the output axial part exactly.

Reversely, when the brake part is in the state of brake-operation, friction-plates at clutch part separate each other certainly, thus the solar gear is changed over to the fixed state, the the decelerating operation at the output-axial part is surely performed.

Moreover, in this invention, the solar gears are mounted on the cylindrical axial part of the housing equipped with the fluid-transporting route towards each piston. While these pistons are externally set for free axial movement towards the collar set to the central boss part of the cylindrical axial part.

-6-

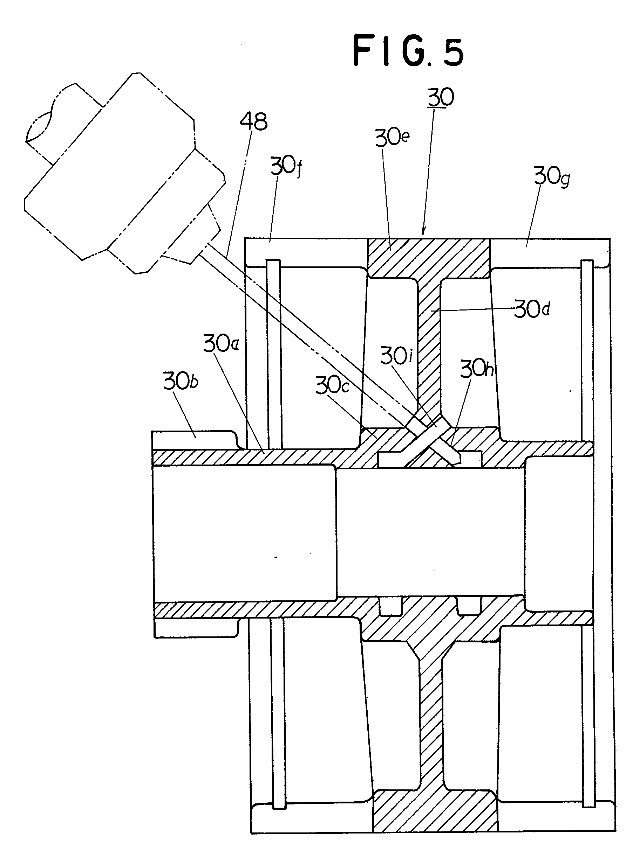

Thereby, the external diameter of the central boss-part in the housing becomes smaller by the thickness of the diameter-direction of the collar, thus as illustrated in Fig. 5, on the drilling occasion of fluid-transporting route (30h) (30i) towards the central boos-part (30c) in the manufacturing process of the housing, there is no hindrance for the drilling on the side of the axial direction of the surrounding cylinder part (30e).

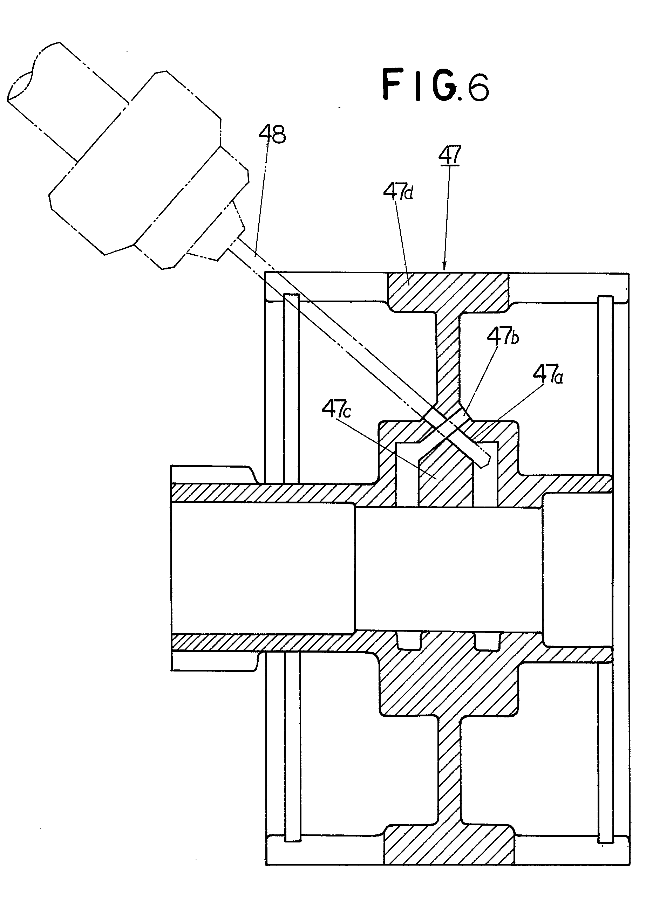

For the reference, Fig. 6 shows the drilling state of the fluid-transporting routes (47a) (47b) in the case of the housing without using the collar as in this invention.

In this housing (47), the diameter of the central boss part (47c) became larger by the amount of the thickness of the diameter-direction of the above mentioned collar, thereby, the axial directional side of the surrounding cylinder (47d) of the housing (47) becomes a hindrance, and the drill (48) cannot be used.

Brief explanation of invention: with drawings:

Fig. 1 shows the diagram of the power-transmitting route of the agricultural tractor applicable for this invention.

Fig. 2 shows the sectional view of the favorable decelerating change-over equipment concerned with this invention.

Fig. 3 shows the enlarged diagram of the main part of Fig. 2.

-7-

Fig. 4 (b)(c) shows the perspective view of the friction-plate used at the clutch part and brake part.

Fig. 5 shows the hole-opening state of the fluid-transporting port of the housing in Fig. 4 (a).

Fig. 6 shows each sectional view of the hole-opened state of the fluid-transporting port of the housing without using the collar.

## Best state for performing this invention:

For detailed explanation of this invention, favorable embodiments adapted for this agricultural tranctor will be explained in the attached drawings.

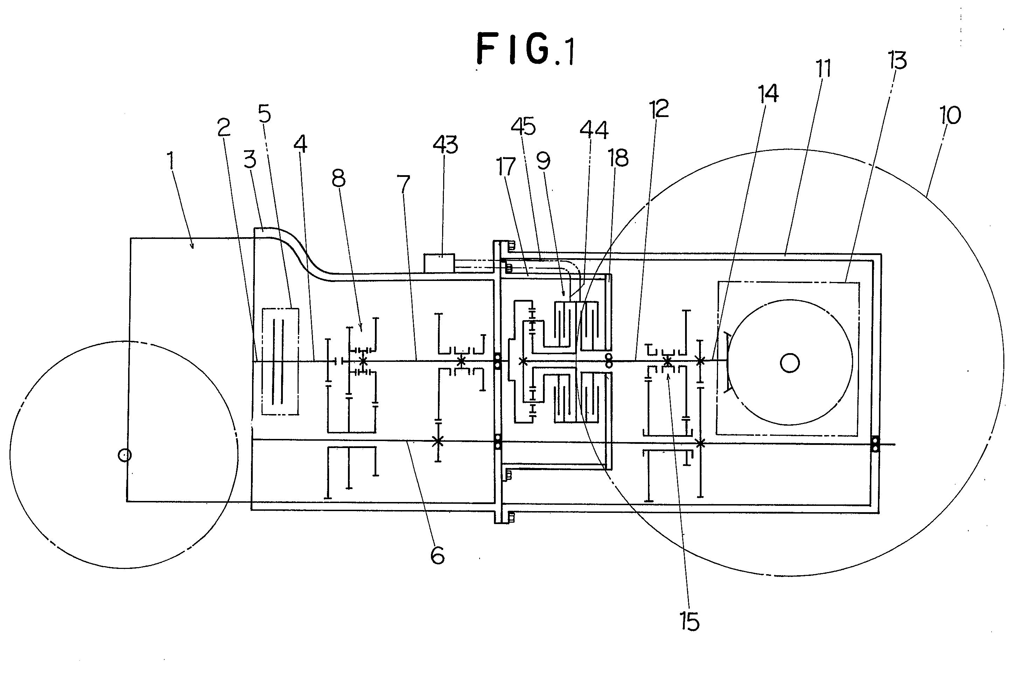

Fig. 1 shows the power-transmitting routes of the transmissin-case of the agricultural tractor adapting the decelerating change-over equipment in a favorable state concerned with this invention. The rotation of the crank shaft (2) due to the motor (1) is transmitted to the input-axis (4) supported axially to the front transmission case (5) through the main clutch (5), and also, it is composed to be able to obtain the desired rotation-speed from the major change-gear shaft (7) by the major change-gear line (8) mounted each on the major change gear shaft (7) and PTO shaft (6) supported to the front transmission case (5).

-8-

Accordingly, the decelerating changeover equipment (9) concerned with this invention is mounted in the rear transmission case (11) supported axially with the rear wheeel (10) of the agricultural tractor, and the rotation power transmitted to the output axial portion (9) from the major change gear shaft (7) is output under the directly connected state to this decelerating changeover-equipment (9), or it is mounted to make output on the output-axial portion (12) at a little reduced speed for the rotation against the rotation-speed at the directly connected transmission.

With the sub-change gear line (15) mounted each on PTP-axis (6) and sub-change gear shaft (14) supported axially to the rear transmission case (11) to rotate and drive the rear wheel driving gear portion (15) of the agricultural tractor, the rotation-power from the output shaft protion (12) is transmitted to the sub-change gear shaft (14) with change-gear.

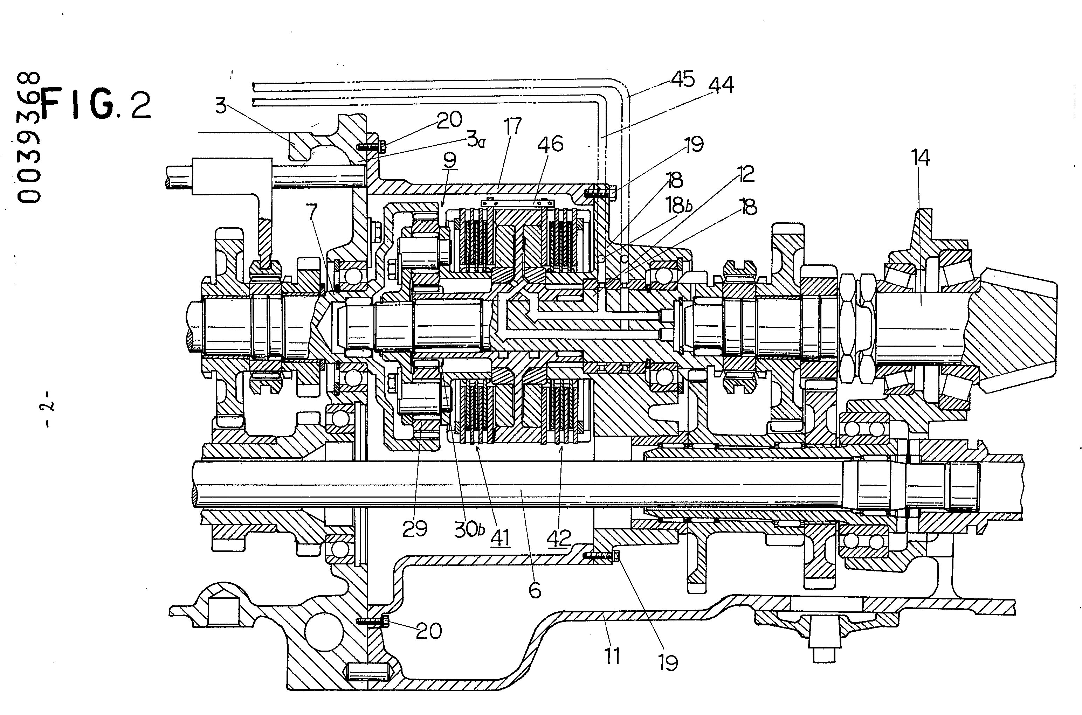

The major part of the above power-transmitting routes is shown in Fig. 2 as a longitudinal section diagram.

Fig. 5 illustrates the detailed longitudinal section diagram of the change-gear equipment of this invention in detail.

The following is the detailed explanation on this mechanism.

-9-

That is, the internal toothed gear (7a) is equipped to the rear part of the major change gear axis (7) supported axially to the front transmission case (3) at the bearing (16), and the terminal lid (18) is fixed with the bolt (19) to one end of the supporting frame (17) of the hollow cylinder opened on both ends, then this supporting frame (17) is mounted with bolt (20) to the wall part (3a) of the front transmission case (3), and the front end of the output-axial part (12) equipped with the teeth part (12a) at the rear part is supported axially to the rear part of the major change-gear axis (7) through the bearing (21) mounted to the end lid (18).

Flange part (23b) equipped with the space (23a) and the carrier (23) equipped with the splined boss like convex strip (23c)(23c) ....around the hollow cylinder are fit in to the spline (24) at the front of the output-axial part (12), and in the manner penetrating this space (23a), the pin (25) inserted to the flange part (23b) is fixed with the tap plate (26) and bolt (27), and the planetary gears (29) (29)... fit in freely rotatably to each pin (25) within the space (23a) rotatably freely through the bearing (28) are interlocked within the internal toothed gear (7a).

-10-

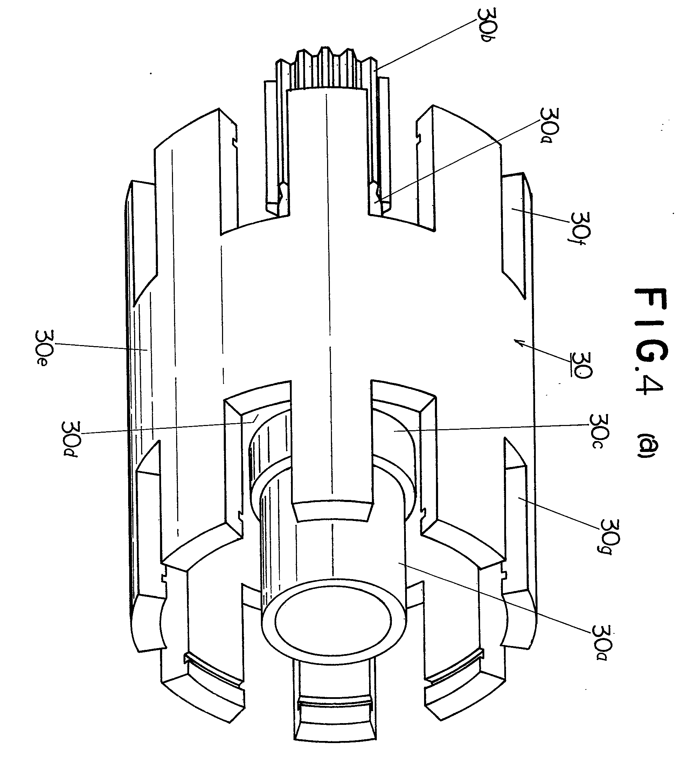

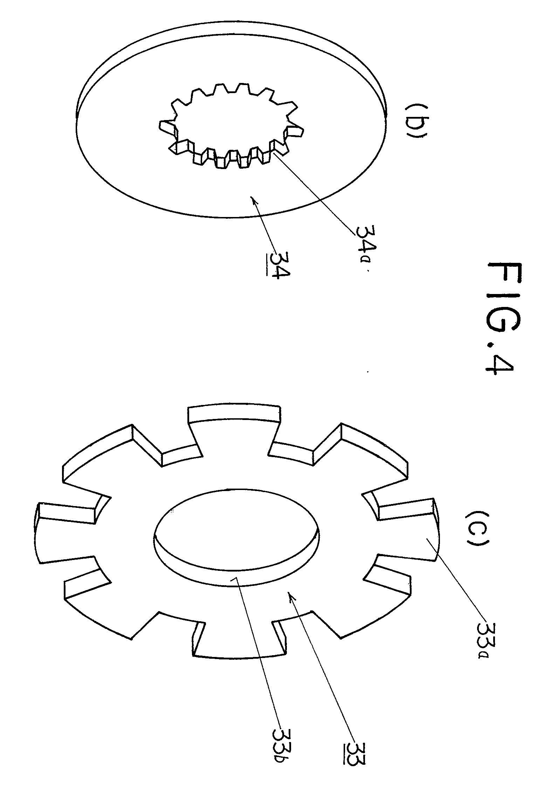

Fig. 4 (a) shows the perspective view, and Fig. 6 illustrates the longitudinal section, in which, solar gear (30b) is equipped at the front of the cylindrical axial part (30a) of the hollow cylinder, and a thick central boss part (30c) is formed around the center of this cylindrical axial part (30a), also the disk-like compartment (30d) is projected surroundingly from the central boss part (30c), and the surrounding cylindrical part (30e) is extendedly mounted in front and in rear towards the cylindrical center from the surrounding if this compartment (30d), while the housing (30) is formed by taking the parallel grooves (30f) (30f) ... and (30g) (30g)...... in the cylindrical length at the front and the rear of the cylindrical longitudinal direction of the surrounding cylindrical part (30e).

The cylinder-axial part (30a) is rotatably and freely fit outside to the output axial part (12) through the bearing (31), and the solar gear (30b) is interlocked with the planetary gears (29)(29) ..., thereby, the carrier is inserted into the supporting frame (17), and also, the convex strip (23c)... of the carrier (23) is formed to be positioned inside of the internal surrounding, and the grooves (30g)(30g).... are formed to be positioned outside of the surrounding of the hollow cylindrical part of the end lid (18).

The internal hole (33b) of the friction plate (33) mounted at the teeth part (33a) on the outside as shown in Fig. 4 (c) is freely fit to the surrounding of the convex strip (23c) of the carrier (23) and the convex strip (18a) of the end lid (18), while the teeth-part (33a) is engaged in each groove (30f)(30f) of the housing (30), thereby, the incorporated friction-plates (33) (33) ...... are interposed with the friction plate (34) as shown in Fig. 4 (b), and the teeth-part (34a) fixed at the internal hole of the friction plate (34) is made slidable along the grooves (30f)(30g) only towards the cylindrical center against the housing (30), also the friction plate (34) is made slidable along the convex strip (23c)(18a) only towards the cylindrical center against the carrier (23) and the end lid (18), thereby, the stoppage of the movement of the friction plates (33)(33) at both ends of the front and rear is made at the retaining rings(35)(35) fit to the carrier (23).       The round ring-shaped collars (36)(36) are fit to each central boss part (30c) in the front and rear part of the compartment (30d), thus the front and rear rooms (37)(38) as formed at the collar (36), compartment (30d) and surrounding cylindrical part (30e) are fit with each piston (39)(40) of the round ring shape, and brake part (42) is each formed on the side of the room (38).

Moreover, the liquid-transporting routes (18b)(18c) opened at the end lid (18) are interconnected with the liquid-transporting route (12b) of the output-axial part (12), and this route (12b) (12c) is equipped to connect with the concave holes (39a) (40a) on the back of the pistons (39)(40) connected to the liquid-transporting route (36a) of the collar (36)(36) through the liquid-transporting routes (30h)(30i) of the central boss-part (30c), thus the pressure- liquid of the pump, outside the drawing, driven by the motor (1) is transported to the change-over valve (45) mounted on the front- transmission case (3), and it is transported from the wall part (3a) mounted to this changeover valve (45) · into the liquid-transporting pipe (44) or (45) arranged in the rear transmission case (11), from which, being transported and supplied to the liquid-transporting

route (18b) or (18c) of the end lid (18), also, being transported to

rooms (57) (58) from the concave hole (39a) or (40a) of the piston (39) or (40) being supplied, or it is formed in the manner that the pressure- liquid of this room (57)(58) is drained into the tank without drawing, by way of the above mentioned changeover valve (45).

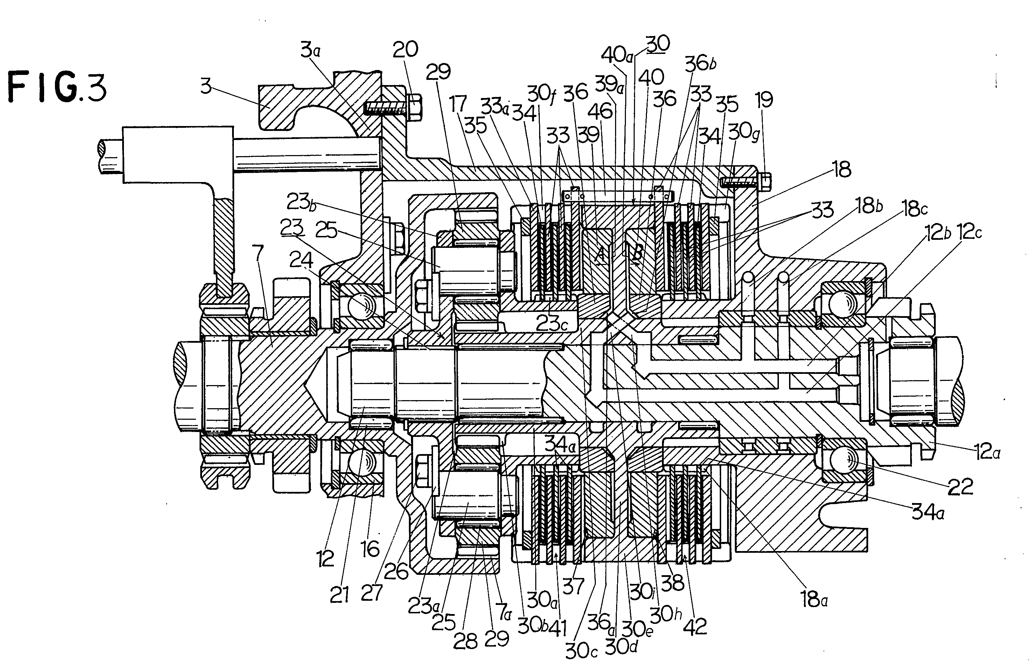

Accordingly, when the pressure liquid pushes the piston (39) towards the direction of arrow-mark (A) in Fig. 3, the friction plates (33) and (34) are connected integrally, then the housing (30) and the carrier (23) are unified by interconnection between the friction-plates (33) (34), thus the output-axial part (12) is rotated in one body with directly connected major change-gear axis (7).

-13-

Whereas when the piston (40) is pushed to the direction of the arrow mark (B) of the Fig. 3, the friction-plate (33) engaged in the housing (30) is engaged in the end lid (18), being connected to always resting friction plate (34), thus the solar gear (30b) stands still, and it is formed that the rotation of the major change gear shaft (7) is transmitted to the output-axial part (12) unified with the carrier (25) with deceleration by the self-rotating planetary gear (29) being engaged with the internal gear (7a) while making revolution around the solar gear (30b) with the rotation of the major change-gear shaft (7).

In other words, this decelerating ratio can be calculated by the following formula and the calculating table of synthetic rotation as listed in the Table 1. That is, the ratio of rotation speed is:

$$\frac{N_{12}}{N_7} = \frac{N_{23}}{N_{23}\left(1 + \frac{Z_{30}}{Z_7}\right)} = \frac{1}{1 + \frac{Z_{30}}{Z_7}} = \frac{Z_7}{Z_7 + Z_{30}} < 1$$

Where,

$Z_7$: Number of teeth of internal gears (7a)

$N_7$: Number of rotation of the above gear

$Z_{29}$: Number of teeth of planetary gear (29)

$N_{29}$: Number of rotation of the above gear

$Z_{30}$: Number of teeth of solar gear (30b)

$N_{30}$: Number of rotaion of the above gear

$N_{27}$: Number of rotation of the carrier (27)

$N_{12}$: Number of rotation of output-axial part united with the carrier

Table 1: Calculating table for synthetic rotations 0039368

|  | Solar gear (30b) | Planetary gear(29) | Internal teeth-gear (7a): Major changegear shaft (7) | Carrier (23) Output axial part(12) |
|---|---|---|---|---|
| Whole fixation + $N_{23}$ rotation | $+ N_{23}$ | $+ N_{23}$ | $+ N_{23}$ | $+ N_{23}$ |
| Carrier (23) fixation | $- N_{23}$ | $(-1)(-N_{23}) \times \dfrac{Z_{30}}{Z_{29}}$ | $(-1)(-N_{23}) \times \dfrac{Z_{30}}{Z_{29}} \times \dfrac{Z_{29}}{Z_{7}}$ | $0$ |
| Synthesis (Combination) | $0$ | $N_{23}\left(1 + \dfrac{Z_{30}}{Z_{29}}\right)$ | $N_{23}\left(1 + \dfrac{Z_{30}}{Z_{7}}\right)$ | $+ N_{23}$ |

For example, in selecting $Z_7 : Z_{30} = 9 : 1$

$$\frac{N_{12}}{N_7} = \frac{9}{10}$$

Thus, by operation of the brake part (42), the reducad rotation-speed by 10% of the major change gear shaft (7) can be transmitted to the output shaft part (12), and in mutual conneetion of friction-plates (33)(33) in direet contact with the front and rear piston (39) (40), for instance, when the pressure solution (liquid) pushes the piston (39) Of the clutch part (41) to the direction of arrow line (A) this connecting pin (46) moves the piston (40) of the brake part (42) in the same direction.

Thereby, the remained pressure liquid in the concave hole (40a) is pushed back towards the liquid-transporting route (36b), and simultaneously, the pressure contact between each friction plate (53) and (54) of the brake part (42) can be released forcedly, and thus, the so called 'clutching sharpness' can be obtained. Even in the case of pushing the piston (40) of the brake part (42) towards the direction of the arrow line (B), the above "sharpness" can be obtained betweeen the friction-plates (53) and (54) of the clutch part (42) by the operation of the connecting pin (46) as in the above.

BAD ORIGINAL

WHAT WE CLAIM IS:

0039368

1. Decelerating changeover equipment composed of the internal teeth-gear, output-axial part supported axially rotatable freelt with planetary gear interlocked with the internal teeth gear, the solar gear interlocked with the planetary gear on the same axial line as that of the internal-teeth gear, clutch part uniting the solar gear with the output axial part on the side of the axial direction of the internal-teeth gear or separable from the solar gear, brake part mounted on the side of the axial line of the clutch part being rotatable of resting the solar gear, and the supporting frame acting also as the member of the resting side of the brake part while incorporating the brake-part and clutch part as well as internal-teeth gear in supporting the output axis.

2. Decelerating changeover equipment as recited in Claim 1, being formed mountable and dismoutable of the said supporting frame to the wall part of the front transmission case.

3. Decelerating changeover equipment as recited in the Claim 2, being composed of the mutual connection movable as one body of each friction plate of the brake part and clutch part pushed directly by each piston, while composing the multiplates-system pushing the plural friction-plates movable on the same axial direction of each piston pushed by the load of pressure liquid on both clutch part and brake part.

4. Decelerating changeover equipment as recited in Claims 1, 2 and 3, comprising the said solar gear formed at the cylinder-axial part of the housing equipped with the liquid-transporting route to each piston which is fit, externally being movable freely toward the axial direction, on the collar fit in the central boss part of the said cylindrical axial part at the opening portion of the said liquid transporting route.

Table of reference numerals, marks and items list


Reference numerals, marks          Items


(1) ........................... Motor

(2) ........................... Crank shaft

(3) ........................... Front transmission case

(3a) .......................... Wall part

(4) ........................... Input-axis

(5) ........................... Main clutch

(6) ........................... PTO shaft

(7) ........................... Major change-gear shaft

(7a) .......................... Internal gear

(8) ........................... Major change-gear line

(9) ........................... Decelerating changeover equipment

(10) .......................... Rear wheel

(11) .......................... Rear transmission case

(12) .......................... Output-axial portion

(12a)(33a)(34a) .............. Teeth part

(12b)(12c)(18b)(18c)(30h) .... Liquid-transporting route
(30i)(36a)(36b)(47a)(47b)

(13) .......................... Rear wheel driving gear portion

(14) .......................... Sub-change gear shaft

(15) .......................... Sub-change gear line

(16)(21)(22)(28)(31)(32) ..... Bearing

(17) .......................... Supporting frame

(18) .......................... End lid

0039368

- 9 -

(18a)(23c) .................... Convex strip

(19)(20)(27) .................. Bolt

(23) .......................... Carrier

(23a) ......................... Space

(23b) ......................... Flange part

(24) .......................... Fit in to the spline

(25) .......................... Pin

(26) .......................... Tap plate

(29) .......................... Planetary gear

(30)(47) ...................... Housing

(30a) ......................... Cylindrical axial part

(30b) ......................... Solar gear

(30c)(47c) .................... Central boss-part

(30d) ......................... Compartment

(30e)(47d) .................... Surrounding cylindrical part

(30f)(30g).................... Groove

(33)(34) ...................... Friction plate

(33b) ......................... Internal hole

(35) .......................... Retaining ring

(36) .......................... Collar

(37)(38) ...................... Room

(39)(40) ...................... Piston

(41) .......................... Clutch part

(42) .......................... Brake part

(39a)(40a) .................... Concave hole

(43) ........................ Change-over valve

(44)(45) ...................... Liquid-transporting pipe

(46) ........................ Connecting pin

(48) ........................ Drill

$Z_7$ $Z_{27}$ $Z_{29}$ $Z_{30}$ ............... Number of teeth

$N_7$ $N_{27}$ $N_{29}$ $N_{30}$ ............... Number of rotation

FIG.1

FIG.2

0039368

# FIG.3

FIG.4 (a)

0039368

FIG.4

(b)

34

34a

(c)

33a

33

33b

# FIG. 5

# FIG.6

48

47

47d

47b

47a

47c

# INTERNATIONAL SEARCH REPORT

International Application No PCT/JP79/00208

0039368

## I. CLASSIFICATION OF SUBJECT MATTER (if several classification symbols apply, indicate all) [3]

According to International Patent Classification (IPC) or to both National Classification and IPC

F16H 3/54    F16H 5/18

## II. FIELDS SEARCHED

### Minimum Documentation Searched [4]

| Classification System | Classification Symbols |
|---|---|
| I P C | F16H 3/54    F16H 5/18    F16H 3/02 |

### Documentation Searched other than Minimum Documentation to the Extent that such Documents are Included in the Fields Searched [8]

## III. DOCUMENTS CONSIDERED TO BE RELEVANT [14]

| Category [*] | Citation of Document, [16] with indication, where appropriate, of the relevant passages [17] | Relevant to Claim No. [18] |
|---|---|---|
| X | JP, A, 49-105065, Columns 12 to 13 Turner Manufacturing Co., Ltd. | 1, 2 |
| X | JP, C2, 132839, Mitsubishi Heavy Industries, Ltd. | 3 |
| X | JP, C2, 106727, Switzerland Rocomocheese and Machine Works | 3. |

* Special categories of cited documents: [16]

"A" document defining the general state of the art

"E" earlier document but published on or after the International filing date

"L" document cited for special reason other than those referred to in the other categories

"O" document referring to an oral disclosure, use, exhibition or other means

"P" document published prior to the International filing date but on or after the priority date claimed

"T" later document published on or after the International filing date or priority date and not in conflict with the application, but cited to understand the principle or theory underlying the invention

"X" document of particular relevance

## IV. CERTIFICATION

| Date of the Actual Completion of the International Search = | Date of Mailing of this International Search Report = |
|---|---|
| November 1, 1979 (01.11.79) | November 5, 1979 (05.11.79) |

| International Searching Authority = | Signature of Authorized Officer [20] |
|---|---|
| Japanese Patent Office | |